Europäisches Patentamt

**European Patent Office**

**Office européen des brevets**

(19)

(11) Numéro de publication: **0 181 802**
A1

(12)

# DEMANDE DE BREVET EUROPEEN

(21) Numéro de dépôt: **85402053.4**

(22) Date de dépôt: **23.10.85**

(51) Int. Cl.⁴: **B 01 J 37/02**
**B 01 J 23/56, B 01 D 53/36**

(30) Priorité: **30.10.84 FR 8416543**

(43) Date de publication de la demande:
**21.05.86 Bulletin 86/21**

(84) Etats contractants désignés:
**BE CH DE FR GB IT LI NL**

(71) Demandeur: **Société Française des Produits pour Catalyse "PRO-CATALYSE"**
**1-4, avenue de Bois Préau**
**F-92500 Rueil-Malmaison(FR)**

(72) Inventeur: **Blanchard, Gilbert**
**5, allée des Acacias Lagny-Le-Sec**
**F-60330-Le Plessis Belleville(FR)**

(72) Inventeur: **Prigent, Michel**
**11, rue des Maronniers**
**F-92500 - Rueil Malmaison(FR)**

(74) Mandataire: **Savina, Jacques et al,**
**RHONE-POULENC RECHERCHES Service Brevets Chimie et Polymères 25, quai Paul Doumer**
**F-92408 Courbevoie Cédex(FR)**

(54) **Procédé de préparation d'un catalyseur pour le traitement des gaz d'échappement des moteurs à combustion interne.**

(57) La présente invention concerne un procédé de fabrication d'un catalyseur pour le traitement des gaz d'échappement des moteurs à combustion interne du type comportant une phase active constituée d'au moins un métal de la mine du platine et d'au moins un métal additionnel et un support obtenu par mélange d'un liant et d'une charge revêtant un substrat monolithique céramique ou métallique, ledit procédé étant du type comportant les étapes suivantes :

1) mélange d'une charge, d'un liant et éventuellement une partie de la phase active,
2) revêtement du substrat avec le mélange,
3) séchage et éventuellement calcination,
4) introduction de la partie de la phase active restante,
5) séchage puis activation

caractérisé en ce qu'au moins 50% en poids rapporté au poids de la charge et du liant est constituée par de l'alumine obtenue par carbonatation de l'aluminate de sodium avec obtention d'un précipité de gel amorphe d'alumine, lavage de ce précipité et éventuellement séchage.

EP 0 181 802 A1

## PROCEDE DE PREPARATION D'UN CATALYSEUR POUR LE TRAITEMENT
## DES GAZ D'ECHAPPEMENT DES MOTEURS A COMBUSTION INTERNE

La présente invention concerne un procédé de préparation d'un catalyseur pour le traitement des gaz d'échappement des moteurs à combustion interne.

Elle a trait plus particulièrement à un catalyseur préparé sur un revêtement d'un substrat métallique ou céramique particulièrement adhérent.

Les catalyseurs formés d'un substrat revêtu d'une pellicule ou d'une couche d'oxydes réfractaires sur laquelle est déposée la phase catalytiquement active, sont utilisés dans la purification catalytique des gaz d'échappement des moteurs à combustion interne fonctionnant à l'essence et des moteurs diesel. Ces catalyseurs comportent un substrat céramique ou métallique sous forme d'une structure inerte et rigide (monolithique) en nids d'abeille revêtu d'une pellicule ou couche comportant de l'alumine sur laquelle est déposée la phase active.

Il a déjà été proposé notamment dans la demande de brevet européen n° 73 703 au nom de la Société Rhône-Poulenc une composition d'alumine pour le revêtement d'un support de catalyseur.

Cette composition qui comporte un liant qui constitue essentiellement la partie dispersée et une charge qui constitue essentiellement la partie non dispersée de la composition est caractérisée en ce que le taux de dispersion dans l'eau de la composition est compris entre 10 et 85%, la granulométrie de la partie non dispersée de la composition est telle que le diamètre moyen des particules d'alumine qui la constitue est compris entre 1 et 15 microns, au moins 70% de ces particules ayant un diamètre compris entre la moitié du diamètre moyen et le double du diamètre moyen.

Les conditions de fonctionnement des catalyseurs pour le traitement des gaz d'échappement des moteurs à combustion interne et notamment les chocs thermiques auxquels ils sont soumis nécessitent de disposer de catalyseurs dont la solidité d'adhérence de la composition de revêtement doit être sans cesse améliorée. Aussi, bien que les compositions décrites dans la demande européenne citée s'avèrent satisfaisantes, la demanderesse a trouvé des compositions qui permettent d'obtenir des catalyseurs pour le traitement des gaz d'échappement des moteurs à combustion interne dont l'adhérence est, d'une façon surprenante, d'une solidité très élevée. Selon l'invention, la solidité de cette adhérence est mesurée par la résistance du revêtement à un traitement de tenue aux ultra-sons.

La présente invention concerne un procédé de fabrication d'un catalyseur pour le traitement des gaz d'échappement des moteurs à combustion interne du type comportant une phase active constituée d'au moins un métal de la mine du platine et d'au moins un métal additionnel et un support obtenu par mélange d'un liant et d'une charge déposés sur un substrat monolithique céramique ou métallique, ledit procédé étant du type comportant les étapes suivantes :

1) mélange d'une charge, d'un liant et éventuellement une partie de la phase active,

2) revêtement du substrat avec le mélange,

3) sèchage et éventuellement calcination,

4) introduction de la partie de la phase active restante,

5) sèchage puis activation

caractérisé en ce qu'au moins 50% en poids rapporté au poids de la charge et du liant est constituée par de l'alumine obtenue par carbonatation de l'aluminate de sodium avec obtention d'un précipité de gel amorphe d'alumine, lavage de ce précipité et éventuellement sèchage.

Les métaux de la mine du platine que l'on met en oeuvre selon le procédé de l'invention sont choisis parmi : le platine, le palladium, l'iridium, le rhodium, le ruthenium, le rhénium, l'argent , l'or.

Selon des formulations catalytiques préférées selon le procédé de l'invention, on met en oeuvre les métaux de la mine du platine choisis parmi : le platine et le palladium et éventuellement au moins un des métaux suivants : l'iridium et le rhodium.

La teneur totale en métaux de la mine du platine des catalyseurs fabriqués selon le procédé de l'invention varie généralement entre 0,005 à 0,8% en poids par rapport au catalyseur. Lorsque l'on met en oeuvre les formulations catalytiques préférées, la teneur en platine et/ou en palladium varie généralement entre 0,04 et 0,5% en poids par rapport au catalyseur ; et éventuellement celle en iridium et rhodium varie généralement entre 0,002 et 0,1%.

Les métaux additionnels que l'on met en oeuvre selon le procédé de l'invention sont choisis parmi : le cobalt, le zinc, le manganèse, le nickel, le tungstène, l'yttrium, les lanthanides, le fer, le cuivre, le chrome, le zirconium, le molybdène, l'étain, le calcium, le strontium, le baryum et éventuellement les métaux de transition des première, seconde et troisième colonnes de la classification périodique des éléments.

Selon des formulations catalytiques préférées selon le procédé de l'invention, on met en oeuvre les métaux additionnels choisis parmi : le cérium, le fer, le cuivre, le zirconium, l'yttrium. Selon des formulations catalytiques particulièrement préférées, on met en oeuvre le cérium et éventuellement le fer.

La teneur totale en métal additionnel des catalyseurs fabriqués selon le procédé de l'invention varie généralement entre 0,1 et 10% en poids rapporté au catalyseur.

Le liant et la charge constituant le support des catalyseurs selon l'invention peuvent être choisis parmi au moins un des composés minéraux ou organiques, généralement des hydroxydes ou des oxydes d'aluminium, de silicium, de titane, de zirconium, de magnésium, de calcium, de strontium, baryum, d'yttrium, de lanthanides, d'hafnium, de thorium, de niobium, de tantale, de chrome, de molybdène, de tungstène. Selon l'invention, au moins 50% en poids rapporté au poids de la charge et du liant est constitué par de l'alumine obtenue par carbonatation de l'aluminate de sodium avec obtention d'un précipité de gel amorphe d'alumine, lavage de ce précipité et éventuellement séchage.

On décrit ci-après le procédé d'obtention de l'alumine obtenu par carbonatation de l'aluminate de sodium.

Les solutions d'aluminate de sodium utilisées peuvent être notamment obtenues selon deux procédés différents (1) par digestion de la bauxite avec une solution de soude caustique telle que celle utilisée dans le procédé Bayer (2) par digestion de l'hydrate Bayer avec recyclage de la solution de soude caustique obtenue par caustification avec la chaux de la solution de carbonate de sodium provenant de l'étape de précipitation du procédé de carbonatation.

Les conditions de carbonatation peuvent être celles qui ont notamment été décrites dans le brevet des Etats-Unis d'Amérique n° 3 268 295 et selon lesquelles on utilisé de préférence un léger excès stoechiométrique de $CO_2$ sous forme gazeuse. La température de carbonatation est comprise entre 25 et 60°C. Le précipité obtenu est ensuite filtré et lavé soigneusement avec de l'eau à 80°C jusqu'à ce que le pH des eaux de lavage soit dans la zone 8 -9. On procède ensuite au vieillissement du précipité à une température d'environ 93°C pendant une période de 5 à 90 minutes. L'hydrate d'alumine obtenu est ensuite lavé à nouveau pour donner l'alumine de base selon l'invention qui est utilisée comme liant sous forme de suspension ou de dispersion aqueuse et comme charge lorsque l'on a opéré le sèchage de la suspension ou de la dispersion. L'hydrate d'alumine obtenu est une boehmite fine ou ultra-fine qui est composée de particules ayant des dimensions dans le domaine colloïdal, c'est-à-dire inférieur à 2000 Å environ.

Le procédé d'obtention d'alumine par carbonatation de l'aluminate de sodium que l'on peut également employer selon un mode de mise en oeuvre préféré de l'invention est celui décrit dans la demande de brevet européen n° 85 592 au nom de la Société Rhône-Poulenc.

Selon le procédé décrit dans cette demande de brevet européen, on opère la fabrication de boemites et de pseudo-boehmites ultra-pures par réaction d'un aluminate alcalin avec de l'anhydride carbonique pour former un précipité d'hydroxycarbonate d'aluminium amorphe par réaction d'un aluminate alcalin avec de l'anhydride carbonique, séparation du précipité obtenu par filtration puis lavage de celui-ci ; le procédé est caractérisé en ce que :

a) dans un première étape on mélange le précipité lavé d'hydroxycarbonate d'aluminium amorphe avec une solution d'un acide, d'une base ou d'un sel, ou leurs mélanges ; ce mélange est effectué en versant la solution sur l'hydroxycarbonate, le pH du milieu ainsi constitué étant inférieur à 11,

b) dans une deuxième étape, on chauffe le milieu réactionnel ainsi constitué à une température inférieure à 90°C, pendant un temps d'au moins 5 minutes,

c) dans une troisième étape, on chauffe le milieu résultant de la deuxième étape à une température comprise entre 90°C et 250°C.

On décrit ci-après un liant et une charge étant posé que la caractéristique du procédé de l'invention consiste en ce qu'au moins 50% en poids de l'alumine constituant la charge et le liant provient de l'alumine obtenue par carbonatation qui a été décrite ci-dessus. Le support des catalyseurs de l'invention est préparé à partir d'une composition aqueuse comportant un liant qui constitue essentiellement la partie dispersée et une charge qui constitue essentiellement la partie non dispersée de la composition. Il convient que le taux de dispersion dans l'eau de la composition, résultant du mélange du liant et de la charge, soit compris entre 5 et 90% et de préférence entre 10 et 85%. Il peut convenir qu'en outre, la granulométrie de la partie non dispersée de la composition soit telle que le diamètre moyen des particules qui la constitue est compris entre 1 et 15 microns, au moins 70% de ces particules ayant un diamètre compris entre la moitié du diamètre moyen et le double du diamètre moyen, ceci afin de conférer au support les caractéristiques de porosité désirées.

Le taux de dispersion est représenté par la proportion de solide qui reste en suspension colloïdale totale après que la composition ait été soumise à une centrifugation. On peut mesurer ce taux de dispersion de la façon suivante : la composition aqueuse est diluée de façon à obtenir une concentration en solide totale égale à 100g/l ; 100cm$^3$ de cette solution sont soumis à une agitation violente pendant 10 minutes ; la solution est ensuite centrifugée pendant 10 minutes à la vitesse de 3000 tours par minute ; on sépare la partie décantée de la partie non décantée constituée par une suspension colloïdale ; on calcine et on pèse la partie décantée, le taux de dispersion est exprimé comme étant le rapport entre la quantité total initiale de solide de la composition moins la quantité de solide décantée sur la quantité totale initiale de solide de la composition.

Le taux de dispersion dans l'eau de la composition aqueuse est compris entre 5 et 90% et de préférence entre 10 et 85%, la granulométrie de la partie non dispersée de la composition est telle que le diamètre moyen des particules qui la constitue est compris entre 1 et 15 microns, au moins 70% de ces particules ayant un diamètre compris entre la moitié du diamètre moyen et le double du diamètre moyen.

La partie non dispersée de la composition est essentiellement constituée par la charge, une partie mineure de celle-ci peut provenir du liant.

La proportion en poids de la partie dispersée de la composition est comprise entre 10 et 85% et de préférence entre 10 et 80%. Il en résulte que la proportion en poids de la partie non dispersée de la composition est comprise entre 15 et 90% et de préférence entre 20 et 90%.

Le liant est constitué essentiellement d'une partie dispersée et éventuellement d'une partie mineure non dispersée ; la partie dispersée représentant au moins 70% en poids du liant.

Le liant mis en oeuvre doit être gélifiable ou coagulable par effet thermique ou chimique.

La gélification ou coagulation par effet thermique est bien connue de l'homme de l'art et peut être obtenue par évaporation de l'eau de la suspension ou de la dispersion aqueuse formant le liant. La gélification ou coagulation par effet chimique est également bien connue de l'homme de l'art dans le cas de l'alumine et peut être obtenue par augmentation du pH de la suspension ou de la dispersion aqueuse d'alumine formant le liant à une valeur supérieure à 9 qui correspond au point isoélectrique de l'alumine.

Les liants et les charges mis en oeuvre en outre provenant de l'alumine obtenue par carbonatation sont ceux qui sont décrits dans la demande de brevet européen n° 73 703.

On décrit ci-après le revêtement du substrat avec le mélange charge-liant contenant éventuellement une partie de la phase active.

Selon un premier mode de mise en oeuvre du procédé de fabrication du support selon l'invention, on peut opérer le mélange de la charge et du liant sous forme de poudres. Le liant, lorsque c'est de l'alumine, sous forme de poudre étant constitué par les divers produits : boehmites, pseudo-boehmite, gels d'alumine amorphe, gels d'hydroxyde d'aluminium, hydrargillite ultra-fine à l'état non peptisé. On met ensuite en contact le mélange poudreux avec de l'eau ou de l'eau acidulée. Le mélange charge-liant-eau est réalisé de telle façon que le pH de la composition finale est inférieur à 4 et dans des proportions telles que le taux de dispersion de la composition finale, est compris entre 5 et 90%

Selon un second mode de mise en oeuvre du procédé de fabrication du support selon l'invention, on mélange sous agitation la charge sous forme de poudre et le liant sous forme de suspension ou de dispersion d'alumine dans des proportions telles que le taux de dispersion de la composition soit compris entre 5 et 90% et que le pH de la composition finale soit inférieur à 4.

Quel que soit le mode de mise en oeuvre du procédé de fabrication du support de l'invention, celui-ci doit présenter, pour pouvoir être appliqué au revêtement d'un substrat de catalyseur, une viscosité comprise entre 10 et 200 centipoises. De telles valeurs de viscosité peuvent notamment être obtenues en ajustant la concentration totale en alumine de la composition dans des limites comprises entre 10 et 40% en poids ou en ajoutant à la composition des épaississants organiques ; ces épaississants organiques devant être compatibles avec notamment le milieu de la composition et le temps de stockage de celle-ci avant sa mise en oeuvre pour le revêtement d'un substrat de catalyseur.

Le revêtement du substrat avec le support de l'invention peut être réalisé de la façon suivante :

- on immerge le substrat céramique dans le mélange charge-liant de l'invention contenant éventuellement une partie de la phase active, de façon à remplir tous les canaux de celui-ci, on peut également opérer par écoulement du mélange à travers les canaux du substrat,

- on opère un égouttage partiel puis un drainage des canaux du substrat, au moyen par exemple d'un courant d'air comprimé,

- on coagule le support par effet thermique ou chimique,

- on sèche à une température inférieure à 300°C puis on calcine éventuellement le substrat revêtu à une température comprise entre 300°C et 700°C.

L'épaisseur du revêtement obtenu avec les compositions de l'invention présentant des caractéristiques de viscosité qui ont été mentionnées ci-dessus, est compris entre environ 2 microns et 100 microns. Pour une compositions donnée, il existe une relation quasi-linéaire entre l'épaisseur du revêtement obtenu et la viscosité de la composition employée.

Afin d'augmenter l'épaisseur de la couche obtenue dans une opération de revêtement, on peut après calcination, opérer un second revêtement, puis un troisième....

La couche superficielle obtenue présente à la fois de la microporosité et de la macroporosité, la répartition de pore du revêtement est telle que 0,05 à 0,50cm³/g du volume poreux est constitué par des pores ayant un diamètre compris entre 0,1 et 0,5 micron, 0 à 0,40cm³/g du volume poreux est constitué par des pores ayant un diamètre compris entre 0,5 et 1 micron et 0 à 0,40cm³/g du volume poreux est constitué par des pores ayant un diamètre compris entre 1 et 20 microns, 0,3 à 0,9 cm³/g du volume poreux est constitué par des pores ayant un diamètre inférieur à 0,1 micron.

La surface spécifique du revêtement est compris entre 20 et 350m²/g.

Le volume poreux total du revêtement est compris entre 0,35cm³/g et 2,2cm³/g et de préférence compris entre 0,5 et 1,5cm³/g.

Après le séchage et éventuellement la calcination, on introduit la partie de la phase active restante. Cette introduction est faite par imprégnation du revêtement, séché et éventuellement calciné, avec les métaux de la mine du platine et les métaux additionnels ou leurs précurseurs.

On opère ensuite le séchage du catalyseur obtenu puis son activation dans un courant d'air à une température comprise entre environ 300 et 800°C pendant quelques heures.

L'activation du catalyseur peut être avantageusement réalisée en atmosphère réductrice à une température comprise entre environ 200 et 700°C, on peut par exemple utiliser comme agents réducteurs l'hydrogène, l'oxyde de carbone et/ou l'hydrogène sulfuré.

Pour les formulations catalytiques préférées on décrit ci-après les mises en oeuvre préférées du procédé de l'invention. Ces formulations sont celles pour lesquelles les métaux de la mine du platine constituant la phase active, sont au moins un métal choisi parmi le platine, le palladium, l'iridium et le rhodium et celles pour lesquelles les métaux additionnels sont le cérium et/ou le fer et éventuellement au moins un métal choisi parmi le zirconium, le cuivre et l'yttrium.

Dans ce cas on introduit la majeure partie du cérium et/ou du fer et éventuellement du zirconium, du cuivre et de l'yttrium dans la suspension au cours de la première étape.

Les métaux de la mine du platine choisis parmi le platine, l'iridium et le rhodium sont introduits dans la quatrième étape ; le palladium pouvant être introduit lors de cette quatrième étape mais étant de préférence introduit lors de la première étape dans la suspension.

Les divers composés qui servent à introduire les métaux dans le catalyseur peuvent être choisis parmi les composés minéraux ou organiques précurseurs desdits métaux.

Pour les formulations catalytiques préférées on utilisera de préférence comme composés du fer et/ou du cérium les sels de fer et/ou de cérium et, plus particulièrement, le nitrate ferrique, le nitrate de fer ammoniacal, le chlorure ferrique et le nitrate céreux, l'acétate céreux, le chlorure céreux et le nitrate cérique ammoniacal ; comme composés du rhodium, du platine et du palladium que l'on peut mettre en oeuvre, on citera notamment le trichlorure de rhodium hydraté, l'acide chloroplatinique, le chlorure de palladium, le nitrate de palladium, ainsi que le dichlorure de rhodium III chloropentammime et les dichlorures de platine II et palladium II tétrammime.

Par ailleurs, ainsi qu'il est bien connu de l'homme de l'art, les catalyseurs de l'invention sont avantageusement traités de façon à leur conférer une bonne stabilité thermique au cours du temps. Ces traitements consistent notamment dans une stabilisation de l'oxyde ou du revêtement en oxyde constituant le support (en générale l'oxyde d'aluminium) par les métaux alcalino-terreux, la silice, les terres rares et/ou l'oxyde de thorium.

Les catalyseurs obtenus selon le procédé de l'invention présentent une efficacité et une durée de vie nettement améliorée pour le traitement des gaz d'échappement des moteurs à combustion interne du fait de la résistance très importante du revêtement du substrat au cours du temps ; ils permettent d'éliminer la majeure partie de l'oxyde de carbone, des hydrocarbures brûlés et éventuellement les oxydes d'azote présents dans ces gaz.

Dans les exemples qui suivent, la résistance aux ultra-sons qui représente la solidité du revêtement du substrat est mesurée de la façon suivante : on soumet le catalyseur à un traitement de 30 minutes dans un bac à ultra-sons de puissance 40 watts et de fréquence 47,6Khz. Le pourcentage de perte de poids caractérise la solidité du dépôt. Selon la présente invention, le pourcentage (en poids) de perte des catalyseurs est inférieur à 1% après 30 minutes de traitement aux ultra-sons.

EXEMPLE 1 : PREPARATION D'UN CATALYSEUR (A) DE L'ART ANTERIEUR

On prépare un sol de boehmites ultra-fines selon le procédé décrit dans la demande de brevet européen n° 15 801.

On procède à la fabrication d'un gâteau de gel d'alumine par précipitation en continu d'une solution d'aluminate de sodium par une solution d'acide nitrique. Le gâteau de gel est essoré, filtré, lavé puis traité à 115°C pendant 24 heures dans un autoclave agité. Le produit obtenu se présente sous forme de pâte contenant 12% d'alumine comptée en $Al_2O_3$. La photographie de ce produit obtenue au microscope électronique montre qu'il est constitué de boehmite ultra-fine entièrement fibrillaire composée de monocristaux de dimension 500 à 1 000 Å. La pâte contenant 12% d'alumine est séchée par atomisation à 250°C afin de la mettre sous forme de poudre de liant (I) d'alumine.

On prépare une alumine active par déshydratation rapide d'hydrargillite dans un réacteur à envolement à l'aide d'un courant de gaz chauds dont la température d'entrée est d'environ 800°C, le temps de contact est d'environ 1/2 seconde. Cette alumine présente une surface spécifique de $300m^2/g$, une perte au feu de 4%, le diagramme de rayon X montre qu'il s'agit d'une alumine de structure mal cristallisée présentant notamment des raies diffuses vers 2,40 Å et 1,40 Å communes aux alumines de transition gamma, êta, chi. La dimension des particules est telle que 70% ont un diamètre inférieur à 17 microns.

On introduit 500g d'alumine active dans un autoclave contenant 10 1 d'une solution aqueuse d'acide nitrique présentant un pH de 0,85 de telle façon que le rapport molaire $\frac{NO3}{Al2O3}$ soit égal à 0,3. L'autoclave est agité ; on chauffe 8h à 130°C.

On obtient une suspension d'alumine contenant de la boehmite ultra-fine sous forme fibrillaire avec un taux de transformation d'environ 40%.

La suspension de boehmite fine obtenue est diluée et traitée par une solution ammoniacale de façon à amener son pH à environ 9.

L'examen au microscope électronique à transmission de cette suspension d'alumine montre qu'il s'agit, pour la partie cristallisée, de boehmite ultra-fine entièrement sous forme fibrillaire composée de lattes longues et étroites dont la longueur est d'environ 2 000 à 2 500 Å et dont les deux autres dimensions sont comprises entre environ 20 et 50 Å.

On sèche la suspension d'alumine par atomisation dans un courant de gaz chauds à une température d'entrée comprise entre environ 700 et 800°C.

Les particules sphéroïdales charge d'alumine (I) obtenues sont ensuite calcinées à 950°C, l'alumine est cristallisée essentiellement dans la phase thêta. Le produit présente une surface spécifique de $110 m^2/g$ et un volume poreux de $0,60 cm^3/g$. Sa granulométrie est telle que 50% des particules ont un diamètre $\emptyset$ compris autour d'une valeur moyenne $\emptyset_M = 7$ microns.

On disperse 800g du liant d'alumine (I) sous forme de poudre dans $2 000 cm^3$ d'eau distillée, on agite 10 minutes puis on ajoute 200g de charge d'alumine (I), on agite encore 10 minutes.

La viscosité de la composition obtenue est de 40 centipoises.

Cette suspension (I) est utilisée pour le revêtement d'une structure monolithique de 1,40 litre présentant 400 cellules par square Inch vendue par la société CORNING.

Le monolithe est plongé dans la suspension à pH = 3,1.

Le support précédemment cité est égoutté et séché pour que les canaux soient vidés, puis il est calciné à 600°C durant 3 heures. Le monolithe ainsi revêtu est immergé dans une solution aqueuse de nitrate de zirconyle et de nitrate de cérium pendant 30 minutes, puis il est égoutté et séché à 150°C et calciné à 550°C durant 3 heures. Les concentrations en nitrate de zirconyle et en nitrate de cérium dans la solution sont telles que, après immersion et calcination, le monolithe contient 3,0% en poids de zirconium et 2,0% en poids de cérium.

Le substrat est ensuite imprégné par trempage dans une solution aqueuse d'acide hexachloroplatinique et de trichlorure de rhodium hydraté.

Les concentrations en acide hexachloroplatinique et en trichlorure de rhodium sont telles que le monolithe est imprégné par 1,4g de platine et 0,14g de rhodium. Après 30 minutes de contact, le monolithe est égoutté, soufflé et séché à 150°C puis activé à 350°C pendant 3 heures dans un four de calcination.

Le catalyseur (A) ainsi préparé contient en poids rapporté au catalyseur monolithique 0,200% de platine, 0,020% de rhodium, 3,0% de zirconium et 2,0% de cérium.

EXEMPLE 2 : PREPARATION D'UN CATALYSEUR (B) DE L'ART ANTERIEUR

On prépare un liant et une charge d'alumine selon le procédé décrit dans la demande de brevet européen n° 73 703.

On prépare un liant d'alumine (II) de la façon suivante : 5 000g d'alumine obtenus par des hydratations d'hydrargillite dans un courant de gaz chaud à 800°C, pendant 0,5 secondes, sont introduits dans un autoclave contenant une solution d'acide nitrique à pH = 1. On chauffe la suspension en l'agitant pendant 4 heures à 180°C. La suspension obtenue, qui constitue le liant d'alumine (II) est séchée par atomisation, à 150°C afin de le mettre sous forme de poudre ; cette poudre présente aux rayons X une structure de boehmite fibrillaire.

Une partie de cette poudre est calcinée sous air à 600°C pendant 2 heures pour obtenir la charge d'alumine (II).

On disperse 200g de liant d'alumine (II) sous forme de poudre dans 2 000cm$^3$ d'eau distillée, on agite pendant 10 minutes puis on rajoute 800g de charge d'alumine (II), on agite encore pendant 10 minutes, puis on rajoute 130g de cérium sous forme de nitrate céreux.

La viscosité de la composition obtenue est de 70 centipoises.

Cette suspension (II) est utilisée pour le revêtement d'une structure monolithe céramique de 1,98 litre présentant 400 cellules par Square Inch. Le monolithe est plongé dans la suspension à pH = 3,5. Le support précédemment cité est égoutté, soufflé et séché pour que les canaux soient vidés, puis il est calciné à 600°C durant 3 heures.

Le substrat est ensuite imprégné par trempage dans une solution aqueuse d'acide hexachloroplatinique. La concentration en acide hexachloroplatinique est telle que le monolithe est imprégné par 1,5g de platine. Après 30 minutes de contact, le monolithe est égoutté, soufflé et séché à 150°C puis activé à 350°C pendant 3 heures dans de l'air de calcination.

Le catalyseur (B) ainsi préparé contient en poids rapporté au catalyseur monolithique : 0,150% de platine et 2% de cérium.

EXEMPLE 3 : PREPARATION D'UN CATALYSEUR (C) DE L'ART ANTERIEUR

On prépare une charge d'alumine III de la façon suivante: on prépare 900g de billes d'alumine de structure gamma préparées selon les procédés décrits dans les brevets français n° 1 449 904 et 1 386 364 par autoclavage en présence d'acide d'agglomérés d'alumine active, séchage et calcination. Ces billes d'alumine obtenues présentent une surface spécifique de 100m$^2$/g, un volume poreux total de 0,90cm$^3$/g et un volume de 0,40cm$^3$/g constitué par des macropores ayant un diamètre supérieur à 1000 Å. Ces billes sont imprégnées par 800cm$^3$ d'une solution aqueuse de nitrate ferrique et de nitrate céreux contenant 30g de fer et 70,0g de cérium.

Après 30 minutes de contact les billes sont séchées à 150°C puis calcinées sous air à 600°C pendant 3heures.

Elles sont ensuite broyées pendant une heure dans un broyeur à boulets.

Les carctéristiques de la charge d'alumine III obtenue sont les suivantes :

. Taux de dispersion : 5%

. Répartition granulométrique : le diamètre moyen des particules est de 7 microns.

On disperse 550g de liant d'alumine (I) sous forme de poudre dans 2000cm$^3$ d'eau distillée, on agite pendant 10 minutes, puis on rajoute 450g de charge d'alumine (III) on agite encore pendant 10 minutes. La viscosité de la composition obtenue est de 30 centipoises.

Cette suspension (III) est utilisée pour le revêtement d'une structure monolithe céramique de 1,98 litre présentant 400 cellules par Square Inch. Le monolithe est plongé dans la suspension à pH = 3,5 puis il est égoutté, soufflé et séché pour que les canaux soient vidés, puis il est calciné à 600°C durant 3 heures.

Le substrat est ensuite imprégné par trempage dans une solution aqueuse d'acide hexachloroplatinique et de trichlorure de rhodium hydraté dont les concentrations sont telles que le monolithe est imprégné par 1,5g de platine et 0,15g de rhodium. Après 30 minutes de contact, le monolithe est égoutté, soufflé et séché à 150°C puis activé à 350°C pendant 3 heures dans un four de calcination.

Le catalyseur (C) ainsi préparé contient en poids rapporté au catalyseur monolithique 0,150% de platine, 0,015% de rhodium, 1,4% de cérium et 0,6% de fer.

EXEMPLE 4 : PREPARATION D'UN CATALYSEUR (D) DE L'ART ANTERIEUR

On prépare 300g de liant (II) de la façon décrite à l'exemple 2.

On prépare une charge d'alumine (IV) de la façon suivante : on imprègne 900g de billes d'alumine active ayant une surface spécifique de 250m$^2$/g et un volume poreux total de 0,55cm$^3$/g, par 500cm$^3$ d'une solution de nitrate de lanthane et de nitrate céreux contenant 50g de lanthane et 50g de cérium. Après 30 minutes de contact, les billes sont séchées à 150°C puis calcinées sous air à 600°C pendant 3 heures. Elles sont ensuite broyées pendant une heure dans un broyeur à boulets. Les caractéristiques de la charge d'alumine (IV) ainsi obtenue sont les suivantes :

. Taux de dispersion : 4%

. Répartition granulométrique : le diamètre moyen des particules est de 13 microns.

On disperse 150g de liant d'alumine (II) sous forme de poudre dans 2 000cm$^3$ d'eau distillée, on agite pendant 10 minutes, puis on rajoute 850g de charge d'alumine (IV), on agite encore pendant 10 minutes.

La viscosité de la composition obtenue est de 45 centipoises.

Cette suspension (IV) est utilisée pour le revêtement d'une structure monolithe métallique de 1,2 litre fabriqué à partir d'une feuille métallique connue sous la marque FECRALLOY. Le monolithe est plongé dans la suspension à pH = 3,5 puis il est égoutté, soufflé et séché pour que les canaux soient vidés, puis il est calciné à 500°C durant 3 heures. Le substrat est ensuite imprégné par trempage dans une solution aqueuse d'acide hexachloroplatinique dont la concentration est telle que le monolithe est imprégné par 2,0g de platine. Après 30 minutes de contact, le monolithe est égoutté, soufflé et séché à 150°C puis activé à 350°C pendant 3 heures dans un four de calcination. Le catalyseur (D) ainsi préparé contient en poids rapporté au catalyseur monolithique 0,125% de platine, 0,625% de lanthane et 0,625% de cérium.

EXEMPLE 5 : PREPARATION D'UN CATALYSEUR (E) DE L'ART ANTERIEUR

On prépare une charge d'alumine (V) de la façon suivante: on prépare 1Kg de billes d'alumine de structure gamma préparées selon les procédés décrits dans les brevets français n° 1 449 904 et 1 386 364 par autoclavage en présence d'acide d'agglomérés d'alumine active, séchage et calcination. Ces billes d'alumine obtenues présentent une surface spécifique de $100m^2/g$, un volume poreux total de $0,90cm^3/g$ et un volume de $0,40cm^3/g$, un volume des macropores ayant un diamètre supérieur à 1000 Å. Ces billes sont imprégnées par $900cm^3$ d'une solution aqueuse de nitrate céreux et contenant 150g de cérium.

Après 30 minutes de contact les billes sont séchées à 150°C puis calcinées sous air à 600°C pendant 3 heures.

Elles sont ensuite broyées pendant une heure dans un broyeur à boulets.

Les caractéristiques de la charge d'alumine (V) obtenue sont les suivantes :

. Taux de dispersion : 5%

. Répartition granulométrique : le diamètre moyen des particules est de 7 microns.

On disperse 150g de liant d'alumine (II) sous forme de poudre dans $2 000cm^3$ d'eau distillée, on agite pendant 10 minutes, puis on rajoute 850g de charge d'alumine (V), on agite encore pendant 10 minutes. On rajoute 50g de cérium sous forme de nitrate céreux.

La viscosité de la composition obtenue est de 50 centipoises.

Cette suspension (V) est utilée pour le revêtement d'une structure monolithe céramique de 1,98 litre présentant 400 cellules par Square Inch. Le monolithe est plongé dans la suspension à pH = 3,5 puis il est égoutté, soufflé et séché pour que les canaux soient vidés, puis il est calciné à 600°C durant 3 heures.

Le substrat est ensuite imprégné par trempage dans une solution aqueuse d'acide hexachloroplatinique de nitrate de palladium et de trichlorure de rhodium dont les concentrations sont telles que le monolithe est imprégné par 750mg de platine, 1,0g de palladium et 75mg de rhodium. Après 30 minutes de contact, le monolithe est égoutté, soufflé et séché à 150°C puis activé à 350°C pendant 3 heures dans un four de calcination.

Le catalyseur (E) ainsi préparé contient en poids rapporté au catalyseur monolithique 0,075% de platine, 1,0% de palladium, 0,0075% de rhodium et 3,2% de cérium.

EXEMPLE 6 : PREPARATION D'UN CATALYSEUR (F) SELON L'INVENTION

On prépare un précipité d'hydroxycarbonate d'aluminium tel que décrit dans la demande de brevet européen n° 85 592 au nom de RHONE-POULENC.

Le mode opératoire suivant est appliqué.

Une solution filtrée d'aluminate de sodium présentant une concentration équivalente en $Al_2O_3$ 81g/l et $Na_2O$ 61,2g/l est introduite dans un réacteur en verre avec agitateur mécanique thermomètre et électrode de mesure dupH. Sous forte agitation, on fait passer un courant de $CO_2$ gazeux à pression atmosphérique, tel qu'un léger excédant s'échappe du réacteur. On laisse évoluer la température jusqu'à 40° puis on la fixe à cette valeur par circulation externe d'eau froide. On coupe le courant de $CO_2$ lorsque, après 11mn, le pH s'est abaissé à 9,5, et on agite encore 5mn. Le précipité est séparé par filtration et lavé sur filtre à l'eau permutée à 30° jusqu'à obtention d'un filtrat de résistivité $3.10^5$ohms.cm. Sur un prélèvement du gâteau de filtration séché à l'air à 30°, on ne décèle en diffraction X aucune organisation cristalline. Le résidu de calcination à 1000° ($Al_2O_3$) est de 51,3%.

Le précipité d'hydroxycarbonate lavé est mélangé à 20° avec une solution aqueuse d'acide nitrique $HNO_3$ en quantités suffisantes pour obtenir dans le mélange, d'une part une concentration résultante en composé d'aluminium exprimée en $Al_2O_3$ de 0,20. Pour réaliser ce mélange, la solution acide est versée progressivement dans la suspension d'hydroxycarbonate, sous forte agitation. Le pH du milieu aqueux obtenu est de 4,4.

Dans une deuxième étape, le milieu de traitement provenant de la première étape est chauffé à une température de 70° pendant un temps de 35mn sous la pression atmosphérique.

Dans une troisième étape, le milieu de traitement provenant de la deuxième étape est chauffé à une température de 155° pendant 4h sous la pression autogène des réactifs.

On obtient une suspension de boehmite lamellaire dont le rapport $H_2O/Al_2O_3$ correspond à 1,35 après séchage à 110°. La teneur en sodium, exprimée par le rapport pondéral $Na_2O/Al_2O_3$ est de 25ppm. L'examen au microscope électronique montre qu'il s'agit d'une boehmite entièrement sous forme de lamelles allongées, en cristallites bien individualisées dont l'épaisseur est de 35 Å et les deux autres dimensions comprises entre 80 et 300 Å.

La suspension est ensuite séchée par atomisation à 150°C afin de la mettre sous forme de poudre de liant (III) d'alumine.

On prépare une charge d'alumine (VI) de la façon décrite à l'exemple 3, en utilisant cette fois une solution aqueuse de nitrate de zirconyle et de nitrate céreux contenant 111g de zirconium et 74g de cérium.

Après 30 minutes de contact les billes sont séchées à 150°C puis celcinées sous air à 600°C pendant 3 heures.

Elles sont ensuite broyées pendant une heure dans un broyeur à boulets.

Les caractéristiques de la charge (VI) obtenue sont les suivantes :

. Taux de dispersion : 5 %

. Répartition granulométrique : le diamètre moyen des particules est de 8 microns.

On disperse 800g de liant d'alumine (III) sous forme de poudre dans 2000cm$^3$ d'eau distillée, on agite pendant 10 minutes, puis on rajoute 200g de charge d'alumine (VI), on agite encore pendant 10 minutes. La viscosité de la composition obtenue est de 60 centipoises.

Cette suspension (VI) est ensuite utilisée comme à l'exemple 1 pour le revêtement d'une structure céramique de 1,40 litre. Le substrat est ensuite imprégné de platine et de rhodium, puis calciné comme à l'exemple 1.

**0181802**

Le catalyseur (F) ainsi préparé contient en poids rapporté au catalyseur monolithique 0,200% de platine, 0,020% de rhodium, 3,0% de zirconium, 2,0% de cérium et 80% de l'alumine est constitué par de l'alumine obtenue par carbonatation de l'aluminate de sodium.

EXEMPLE 7 : PREPARATION D'UN CATALYSEUR (G) SELON L'INVENTION

On prépare un précipité d'hydroxycarbonate d'aluminium tel que décrit dans l'exemple 6.

Le précipité d'hydroxycarbonate lavé est mélangé à 20°C avec une solution aqueuse d'acide nitrique $HNO_3$ en quantités suffisantes pour obtenir dans le mélange, d'une part une concentration résultante en composé d'aluminium exprimée en $Al_2O_3$ de 130g/l et, d'autre part un rapport molaire entre la concentration en ion nitrique et la concentration en composé d'aluminium exprimée en $Al_2O_3$ de 0,70. Le pH du milieu aqueux obtenu est de 3,1.

Dans une deuxième étape, le milieu de traitement de la première étape est chauffé à une température de 85° pendant 30mn sous la pression atmosphérique.

Dans une troisième étape, le milieu de traitement provenant de la deuxième étape est chauffé à une température de 160°C pendant 3 heures sous la pression autogène des réactifs.

On obtient une suspension de boehmite sous forme d'aiguilles dont le rapport $H_2O/Al_2O_3$ correspond à 1,45 après séchage à 110°C. L'examen au microscope électronique montre qu'il s'agit d'une boehmite entièrement sous forme d'aiguilles dont l'épaisseur est de 30 Å, la largeur de 100 à 150 Å et la longueur 1000 à 3000 Å.

La suspension est ensuite séchée par atomisation à 150°C puis calcinée à 600°C afin de la mettre sous forme de poudre de charge (VII) d'alumine.

Les caractéristiques de la charge d'alumine (VII) obtenue sont les suivantes :

. Taux de dispersion 4,5%

. Répartition granulométrique : le diamètre moyen des particules est de 10 microns.

On prépare un liant (II) d'alumine de la façon décrite à l'exemple 2.

On disperse 200g de liant d'alumine (II) sous forme de poudre dans 2 000cm$^3$ d'eau distillée, on agite pendant 10 minutes, puis on rajoute 800g de charge d'alumine (VII), on agite encore pendant 10 minutes. On rajoute ensuite 110g de cérium sous forme de nitrate céreux. La viscosité de la composition obtenue est de 80 centipoises. Cette suspension (VII) est ensuite utilisée comme à l'exemple 2 pour le revêtement d'une structure monomithe céramique de 1,98 litre. Le substrat est ensuite imprégné de platine puis calciné comme à l'exemple 2.

Le catalyseur (G) ainsi préparé contient en poids par rapport au catalyseur monolithique 0,150% de platine, 2% de cérium et 80% de l'alumine est constituée par de l'alumine obtenue par carbonatation de l'aluminate de sodium.

EXEMPLE 8 : PREPARATION D'UN CATALYSEUR (H) SELON L'INVENTION

On prépare un précipité d'hydroxycarbonate d'aluminium tel que décrit dans l'exemple 6.

Le précipité d'hydroxycarbonate lavé est mélange à 20°C avec une solution aqueuse d'acide nitrique $HNO_3$ en quantité suffisante pour obtenir dans le mélange d'une part, une concentration résultante en composé d'aluminium exprimée en $Al_2O_3$ de 130g/1 et, d'autre part, un rapport molaire entre la concentration en ion nitrique et la concentration en composé d'aluminium exprimée en $Al_2O_3$ de 0,40. Le pH du milieu aqueux obtenu est de 4,6.

Dans une deuxième étape, le milieu de traitement de la première étape est chauffé à une température de 70°C pendant 2 heures sous pression atmosphérique.

Dans une troisième étape, le milieu de traitement de la deuxième étape est chauffé à une température de 160°C pendant 3heures sous la pression autogène des réactifs.

On obtient une suspension deboehmite sous forme d'aiguilles dont le rapport $H_2O/Al_2O_3$ correspond à 1,30 après sèchage à 110°C. L'examen au microscope électronique montre qu'il s'agit d'une boehmite sous forme de lattes dont les particules ont les dimensions suivantes : épaisseur : 40 Å, largeur 200 à 300 Å, longueur 500 à 1000°C.

La suspension est ensuite séchée par atomisation à 150°C afin de la mettre sous forme de poudre de liant (IV) d'alumine. Une partie de l'alumine liant (IV) est calcinée sous air sec pendant 3 heures à 600°C et conduit à la charge (VIII) d'alumine dont les caractéristiques sont les suivantes :

. Taux de dispersion : 6%

. Répartition granulométrique : le diamètre moyen des particules est de 5 microns,

On disperse 150g de liant d'alumine (IV) sous forme de poudre dans 2 000cm³ d'eau distillée, on agite pendant 10 minutes, puis on rajoute 850g de charge d'alumine (VIII), on agite encore pendant 10 minutes. On rajoute ensuite 50g de cérium et 50g de lanthane sous forme de nitrate céreux et de nitrate de lanthane. La viscosité de la composition obtenue est de 50 centipoises.

Cette suspension (VIII) est ensuite utilisée comme à l'exemple 4 pour le revêtement d'une structure monolithe métallique de 1,2 litre. Le substrat est ensuite imprégné de platine plus calciné comme à l'exemple 4.

Le catalyseur (H) ainsi préparé contient en poids par rapport au catalyseur monolithique 0,125% de platine, 0,625% de cérium, 0,625% de lanthane et 100% de l'alumine est constitué par de l'alumine obtenue par carbonatation de l'alumine de sodium.

EXEMPLE 9 : PREPARATION D'UN CATALYSEUR (I) SELON L'INVENTION

On prépare un précipité d'hydroxycarbonate d'aluminium tel que décrit dans l'exemple 6.

Le précipité d'hydroxycarbonate lavé est mélangé à la température de 18° avec une solution aqueuse d'acide acétique en quantités suffisantes pour obtenir dans le mélange d'une part, une concentration résultante en composé d'aluminium exprimé en $Al_2O_3$ de 110g/l et, d'autre part, un rapport molaire entre la concentration en ion acétique et la concentration en composé d'aluminium exprimée en $Al_2O_3$ de 0,85. Le pH du milieu aqueux obtenu est de 5,0 mesuré à 20°C.

Dans une deuxième étape, le milieu de traitement provenant de la première étape est chauffé à une température de 85° pendant un temps de 20mn sous la pression atmosphérique.

Dans une troisième étape, le milieu de traitement provenant de la deuxième étape est chauffé à une température de 140° pendant un temps de 3h sous la pression autogène des réactifs.

On obtient une suspension de boehmite aciculaire fine, dont le rapport molaire $H_2O/Al_2O_3$ correspond à 1,5 après séchage à 110°. La teneur en sodium exprimée par le rapport pondéral $Na_2O/Al_2O_3$ est de 20ppm. L'examen au microscope électronique à transmission de cette suspension montre qu'il s'agit de boehmite entièrement sous forme fibrillaire composée de cristallits dont l'épaisseur est de 25 Å et dont les deux autres dimensions sont comprises entre 50 et 100 Å.

La suspension est ensuite séchée par atomisation à 150°C. afin de la mettre sous forme de poudre de liant (V) d'alumine.

D'autre part, on prépare une charge d'alumine (III) de la façon décrite à l'exemple 3. On disperse 550g de liant d'alumine (V) sous forme de poudre dans 2 000cm³ d'eau distillée, on agite 10 minutes, puis on rajoute 450g de charge d'alumine (III), on agite encore pendant 10 minutes. La viscosité de la composition obtenue est de 30 centipoises.

Cette suspension (IX) est ensuite utilisée comme à l'exemple 3 pour le revêtement d'une structure monolithe céramique de 1,98litre. Le substrat est ensuite imprégné de platine et de rhodium puis il est calciné comme à l'exemple 3.

Le catalyseur (I) ainsi préparé contient en poids rapporté au catalyseur monolithique 0,150% de platine, 0,015% de rhodium, 1,4% de cérium, 0,6% de fer et 55% de l'alumine est constituée par de l'alumine obtenue par carbonatation de l'aluminate de sodium..

EXEMPLE 10 : PREPARATION D'UN CATALYSEUR (I) SELON L'INVENTION

On prépare un précipité d'hydroxycarbonate d'aluminium tel que décrit dans l'exemple 6.

Une partie du précipité d'hydroxycarbonate lavé est mélangé à 20° avec une solution aqueuse d'ammoniaque en quantités suffisantes pour obtenir dans le mélange, d'une part une concentration résultante en composé d'aluminium exprimée en $Al_2O_3$ de 50g/1 et, d'autre part, un rapport molaire entre la concentration en ion $NH_4^+$ (calculée en supposant complète l'ionisation de l'ammoniaque ou du produit résultant de sa réaction avec l'hydroxycarbonate) et la concentration en composé d'aluminium exprimée en $Al_2O_3$ de 0,20. Le pH du milieu aqueux ainsi obtenu est de 10,2.

Dans une deuxième étape, le milieu de traitement provenant de la première étape est chauffé à une température de 85° pendant un temps de 4h sous la pression atmosphérique.

Dans une troisième étape, le milieu de traitement provenant de la deuxième étape est chauffé à une température de 150° pendant 6h sous la pression autogène des réactifs.

On obtient une suspension de boehmite lamellaire dont le rapport $H_2O/Al_2O_3$ correspond à 1,2 après séchage à 110°. La teneur en sodium exprimée par le rapport pondéral $Na_2/Al_2O_3$ est de 15ppm. L'examen au microscope électronique montre qu'il s'agit d'une boehmite entièrement sous forme de lamelles rhombiques, en cristallites dont l'épaisseur est de 50 Å et les deux autres dimensions comprises entre 200 et 500 Å.

La suspension est ensuite séchée par atomisation à 150°C afin de la mettre sous forme de poudre de liant (VI) d'alumine. La seconde partie du précipité d'hydroxycarbonate lavé est mélangé à 25° avec une solution aqueuse d'acétate d'ammonium en quantités suffisantes pour obtenir dans le mélange, d'une part une concentration résultante en composé d'aluminium exprimée en $Al_2O_3$ de 80g/l et, d'autre part, un rapport molaire entre la somme des ions acétate et des ions ammonium et la concentration en composé d'aluminium exprimée en $Al_2O_3$, de 0,15. Le pH du milieu aqueux obtenu est de 6,8.

Dans une deuxième étape, le milieu de traitement provenant de la première étape est chauffé à une température de 60° pendant un temps de 3h, sous la pression atmosphérique.

Dans une troisième étape, le milieu de traitement provenant de la deuxième étape est chauffé à une température de 120° pendant 2h sous la pression autogène des réactifs.

On obtient une suspension de boehmite lamellaire dont le rapport $H_2O/Al_2O_3$ correspond à 1,3 après séchage à 110°. La teneur en sodium, exprimée par le rapport pondéral $Na_2O/Al_2O_3$ est de 18ppm. L'examen au microscope électronique à transmission montre qu'il s'agit d'une boehmite entièrement sous forme de cristallites lamellaires d'environ 35 Å d'épaisseur et dont les deux autres dimensions sont voisines de 100 Å. Ces cristallites se regroupent en amas allongés.

Après calcination à 600°C du produit séché à 150°C par atomisation, les caractéristiques de la charge d'alumine (IX) sont les suivantes :

. Taux de dispersion : 7%

. Répartition granulométrique : le diamètre moyen des particules est de 6 microns.

On disperse 150g de liant d'alumine (VI) sous forme de poudre dans 2 000cm³ d'eau distillée, on agite pendant 10 minutes, puis on rajoute 850g de charge d'alumine (IX), on agite encore pendant 10 minutes. On rajoute ensuite 200g de cérium sous forme de nitrate céreux. La viscosité de la composition obtenue est de 35 centipoises.

Cette suspension (X) est ensuite utilisée comme à l'exemple 5 pour le revêtement d'une structure monolithe de 1,98 litre. Le substrat est ensuite imprégné de platine, palladium et rhodium puis calciné comme à l'exemple 5.

Le catalyseur (J) ainsi préparé contient en poids par rapport au catalyseur monolithique 0,075% de platine, 0,100% de palladium, 0,00725% de rhodium, 3,2% de cérium et 100% de l'alumine est constitué par de l'alumine obtenue par carbonatation de l'aluminate de sodium.

EXEMPLE 11 _ TENUE EN ENDURANCE DES CATALYSEURS A, C, E, F, I et J POUR L'ELIMINATION SIMULTANEE DU MONOXYDE DE CARBONE, DES HYDROCARBURES IMBRULES ET DES OXYDES D'AZOTE DANS LES GAZ D'ECHAPPEMENT D'UN MOTEUR FONCTIONNANT O LA RICHESSE 1 SUR UN BANC D'ESSAIS.

Le moteur utilisé pour ces essais est un moteur Renault 18 type USA d'une cylindrée de 1647cm³ muni d'une alimentation par injection d'essence de marque BOSCH L-JETRONIC régulée à la richesse 1 grâce à une sonde à oxygène placée en sortie du collecteur d'échappement.

Le carburant consommé par le moteur dans ces essais est de l'essence sans plomb contenant toutefois une teneur résiduelle en plomb ajustée dans tous les cas à 0,013g/litre.

Le moteur étant accouplé à un frein dynamométrique, le régime de rotation et la charge imposés au moteur sont réglés de manière à avoir un débit de gaz d'échappement de 85Nm³/h et une température en entrée du pot catalytique de 475 $\pm$ 10°C.

Les catalyseurs monolithiques ont été montés dans des enveloppes métalliques soudées et installées sur la ligne d'échappement à une distance d'environ 0,80m du moteur, à l'emplacement prévu à l'origine par le constructeur du véhicule.

Des pots catalytiques contenant les catalyseurs A, C, E, F, I et J décrits dans les exemples 1, 3, 5, 6, 9 et 10 sont adaptés successivement sur la ligne d'échappement du moteur.

La mesure du taux d'élimination de chacun des trois polluants est effectuée périodiquement par l'analyse des gaz en amont et en aval des mots.

Le tableau I ci-dessous rassemble les résultats obtenus au départ de l'essai et après 1 000 heures de marche.

On peut constater que la stabilité de l'activité des catalyseurs préparés selon l'invention est notablement améliorée par rapport à celle des catalyseuirs préparés selon l'art antérieur.

### TABLEAU 1

| | N° de l'exemple | Référence du catalyseur | Epuration initiale en % | | | Epuration après 1000h en % | | |
|---|---|---|---|---|---|---|---|---|
| | | | CO | HC | $NO_x$ | CO | HC | $NO_x$ |
| Art | 1 | A | 96,7 | 95,9 | 95,0 | 83,5 | 81,9 | 76,1 |
| | 3 | C | 96,5 | 96,1 | 93,2 | 83,2 | 82,1 | 75,3 |
| Antérieur | 5 | E | 97,1 | 95,4 | 91,1 | 82,9 | 80,3 | 73,9 |
| Invention | 6 | F | 97,4 | 96,0 | 94,7 | 90,5 | 90,0 | 86,9 |
| | 9 | I | 97,0 | 96,5 | 94,1 | 90,1 | 91,2 | 86,5 |
| | 10 | J | 96,3 | 93,5 | 92,7 | 91,5 | 90,7 | 85,7 |

EXEMPLE 12 - TENUE EN ENDURANCE DES CATALYSEURS B, D, G et H POUR L'OXYDATION DU MONOXYDE DE CARBONE ET DES HYDROCARBURES IMBRULES DANS LES GAZ D'ECHAPPEMENT D'UN MOTEUR SUR BANC D'ESSAIS

Le moteur utilisé pour ces essais est un moteur Renault R20 type 843/20 de cylindrée totale 1647cm³, équipé d'une alimentation en air secondaire par des clapets Pulsair.

Le carburant consommé par le moteur dans ces essais est de l'essence sans plomb contenant toutefois une teneur résiduelle en plomb ajustée dans tous les cas à 0,013g/litre. Le moteur étant accouplé à un frein dynamométrique, le régime de rotation et la charge imposés au moteur sont réglés de manière à avoir un débit de gaz d'échappement de 85Nm$^3$/h et une température en entrée pot catalytique de 475 $\pm$ 10°C.

Les règlages de carburation et d'allumage sont ceux préconisés par le constructeur.

Des pots catalytiques similaires à ceux utilisés dans l'exemple 11 et contenant les catalyseurs B, D, G, et H décrits dans les exemples 2, 4, 7 et 8 sont adaptés successivement sur la ligne d'échappement du moteur.

La mesure du taux d'élimination du monoxyde de carbone et des hydrocarbures imbrûlés est effectuée périodiquement par l'analyse des gaz en amont et en aval des pots.

Le tableau II ci-dessous rassemble les résultats obtenus au départ de l'essai et après 1000 heures de marche.

<p style="text-align:center;"><u>TABLEAU II</u></p>

| | N° de l'exemple | Référence du catalyseur | Epuration initiale en % | | Epuration après 1000h en % | |
|---|---|---|---|---|---|---|
| | | | CO | HC | CO | HC |
| Art | 2 | B | 98,4 | 94,2 | 83,3 | 80,2 |
| Antérieur | 4 | D | 97,7 | 92,5 | 75,4 | 72,2 |
| Invention | 7 | G | 98,9 | 95,6 | 90,3 | 90,7 |
| | 8 | H | 98,0 | 93,4 | 88,4 | 87,5 |

On peut constater que la stabilité de l'activité des catalyseurs préparés selon l'invention est notablement améliorée par rapport à celle des catalyseurs préparés selon l'art antérieur.

EXEMPLE 13 - <u>TENUE AUX ULTRA-SONS DES CATALYSEURS A,B,C,D,E,F,G,H,I</u> <u>et J</u>

Les essais comparatifs de tenue aux ultra-sons des catalyseurs A, B, C, D, E, F, G, H, I et J décrits dans les exemples 1 à 10, ont été réalisés dans les conditions suivantes :

- un échantillon de section 40mm x 40mm et de hauteur 40mm est découpé à l'aide d'une scie diamant dans chaque catalyseur, puis soufflé à l'air comprimé pour éliminer les débrits éventuels de céramique,

- l'échantillon est conditionné dans une étuve ventilée à 300°C pendant 16 heures,

- on pèse chaque pièce sur une balance au 1/10 de milligramme : poids $p_1$,

- on immerge l'échantillon dans une cuve à ultra-sons en le suspendant par un fil métallique passant par le centre du monolithe, les canaux de l'échantillon de monolithe étant placés perpendiculairement à la surface du liquide. L'échantillon est ainsi positionné à 2cm du fond de la cuve à ultra-sons. L'appareil à ultra-sons utilisé pour ces essais est de marque BRANSONIC, type 221. Ses principales caractéristiques sont :

- fréquence 47,6 $KH_3$
- puissance 40 watts
- volume de la cuve : 2,5 litres, remplie lors de ces essais à 2,0 litres avec de l'eau distillée,

- on soumet le catalyseur à un traitement aux ultra-sons pendant 30 minutes,

- après le traitement aux ultra-sons l'échantillon est reconditionné à 300°C pendant 16 heures,

- on repèse ensuite l'échantillon : poids $P_2$,

- on exprime le pourcentage de perte en poids suivant le calcul

$$\frac{P1 - P2}{P1} \times 100$$

Le tableau III ci-après rassemble les résultats des mesures de résistance aux ultra-sons des catalyseurs A, B, C, D, E, F, G, H, I et J décrits dans les exemples 1 à 10.

TABLEAU III

|  | N° de l'exemple | Référence du catalyseur | Pourcentage de perte de poids après 30 minutes de traitement aux ultra-sons |
|---|---|---|---|
| Art antérieur | 1 | A | 1,55 |
| | 2 | B | 1,40 |
| | 3 | C | 1,70 |
| | 4 | D | 2,40 |
| | 5 | E | 1,25 |
| Invention | 6 | F | 0,26 |
| | 7 | G | 0,10 |
| | 8 | H | 0,87 |
| | 9 | I | 0,17 |
| | 10 | J | 0,31 |

On peut constater que la résistance aux uiltra-sons des catalyseurs préparés selon l'invention est, dans tous les cas, supérieure à celle des catalyseurs préparés selon l'art antérieur. Selon les catalyseurs de l'invention le pourcentage de perte de poids lors d'un traitement aux ultra-sons (fréquence 47,6KH$_3$ - 40 watts) de 30 minutes est inférieure à 1%.

28                    **0181802**

<u>REVENDICATIONS</u>

1) Procédé de fabrication d'un catalyseur pour le traitement des gaz d'échappement des moteurs à combustion interne du type comportant une phase active constituée d'au moins un métal de la mine du platine et d'au moins un métal additionnel et un support obtenu par mélange d'un liant et d'une charge déposé sur un substrat monolithique céramique ou métallique, ledit procédé étant du type comportant les étapes suivantes :

1) mélange d'une charge, d'un liant et éventuellement une partie de la phase active,

2) revêtement du substrat avec le mélange,

3) séchage et éventuellement calcination,

4) introduction de la partie de la phase active restante,

5) séchage puis activation

caractérisé en ce qu'au moins 50% en poids rapporté au poids de la charge et du liant est constituée par de l'alumine obtenue par carbonatation de l'aluminate de sodium avec obtention d'un précipité de gel amorphe d'alumine, lavage de ce précipité et éventuellement séchage.

2) Procédé selon la revendication 1 caractérisé en ce que les métaux de la mine du platine sont choisis parmi le platine, le palladium, l'iridium, le rhodium, le ruthenium, le rhénium, l'argent, l'or, la teneur totale dans ces métaux étant comprise entre 0,005% et 0,8% en poids par rapport au catalyseur.

3) Procédé selon la revendication 1 caractérisé en ce que les métaux additionnels sont choisis parmi le cobalt, le zinc, le manganèse, le nickel, le tungstène, l'yttrium, les lanthanides, le fer, le cuivre, le chrome, le zirconium, le molybdène, l'étain, le calcium, le strontium, le baryum et les métaux de transition des première, seconde et troisième colonnes de la classification périodique des éléments, la teneur totale dans ces métaux étant comprise entre 0,1 et 10% en poids rapporté au catalyseur.

4) Procédé selon la revendication 1 caractérisé en ce que le liant et la charge constituant le support des catalyseurs selon l'invention sont choisis parmi au moins un des composés et généralement des hydroxydes ou des oxydes d'aluminium, de silicium, de titane, de zirconium, de magnésium, de calcium, de strontium, baryum, d'yttrium, de lanthanides, d'hafnium, de thorium, de niobium, de tantale, de chrome, de molybdène, de tungstène ; au moins 50% en poids rapporté au poids de la charge et du liant est constitué par de l'alumine obtenue par carbonatation de l'aluminate de sodium avec obtention d'un précipité de gel amorphe d'alumine, lavage de ce précipité et éventuellement séchage.

5) Procédé selon la revendication 1 caractérisé en ce que les solutions d'aluminate de sodium utilisées sont obtenues (1) soit par digestion de la bauxite avec une solution de soude caustique telle que celle utilisée dans le procédé Bayer (2) soit par digestion de l'hydrate Bayer avec recyclage de la solution de soude caustique obtenue par caustification avec la chaux de la solution de carbonate de sodium provenant de l'étape de précipitation du procédé de carbonatation ; lors de la carbonatation on utilisé de préférence un léger excès stoechiométrique de $CO_2$ sous forme gazeuse ; la température de carbonatation est comprise entre 25 et 60°C ; le précipité obtenu est ensuite filtré et lavé soigneusement avec de l'eau à 80°C jusqu'à ce que le pH des eaux de lavage soit dans la zone 8 -9 ; on procède ensuite au vieillissement du précipité à une température d'environ 93°C pendant une période de 5 à 90 minutes ; l'hydrate d'alumine obtenu est ensuite lavé à nouveau pour donner l'alumine de base qui est utilisée comme liant sous forme de suspension ou de dispersion aqueuse et comme charge lorsque l'on a opéré le séchage de la suspension ou de la dispersion ; l'hydrate d'alumine obtenu est une boehmite fine ou ultra-fine qui est composée de particules ayant des dimensions dans le domaine colloïdal, c'est-à-dire inférieur à 2000 Å environ.

6) Procédé selon la revendication 1 caractérisé en ce que pour l'obtention de l'alumine par carbonatation de l'aluminate de sodium on opère la fabrication de boehmites et de pseudo-boehmites ultra-pures par réaction d'un aluminate alcalin avec de l'anhydride carbonique pour former un précipité d'hydroxycarbonate d'aluminium amorphe par réaction d'un aluminate alcalin avec de l'anhydride carbonique, séparation du précipité obtenu par filtration puis lavage de celui-ci, puis :

30

a) dans un première étape on mélange le précipité lavé d'hydroxycarbonate d'aluminium amorphe avec une solution d'un acide, d'une base ou d'un sel, ou leurs mélanges ; ce mélange est effectué en versant la solution sur l'hydroxycarbonate, le pH du milieu ainsi constitué étant inférieur à 11,

b) dans une deuxième étape, on chauffe le milieu réactionnel ainsi constitué à une température inférieure à 90°C, pendant un temps d'au moins 5 minutes,

c) dans une troisième étape, on chauffe le milieu résultant de la deuxième étape à une température comprise entre 90°C et 250°C.

7) Catalyseur obtenu selon le procédé de l'une quelconque des revendications précédentes caractérisé en ce que la solidité du revêtement est telle que, après 30 minutes de traitement aux ultra-sons, le pourcentage de perte en poids dudit catalyseur est inférieur à 1%.

**0181802**

Numero de la demande

EP 85 40 2053

# Office européen des brevets

## RAPPORT DE RECHERCHE EUROPEENNE

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| D,Y | EP-A-0 085 592 (RHONE-POULENC) * Page 2, ligne 2 - page 10, ligne 20; exemples; page 17, lignes 31-35 * | 1 | B 01 J 37/02 B 01 J 23/56 B 01 D 53/36 |
| D,A | | 5,6 | |
| | --- | | |
| Y | EP-A-0 060 740 (PROCATALYSE) * Revendications; exemple 5, page 9 * | 1 | |
| A | | 2-4 | |
| | ----- | | |

**DOMAINES TECHNIQUES RECHERCHES (Int. Cl.4)**

B 01 J 37/00
B 01 J 23/00
B 01 D 53/00

Le présent rapport de recherche a été établi pour toutes les revendications

| Lieu de la recherche LA HAYE | Date d'achèvement de la recherche 05-02-1986 | Examinateur BOGAERTS M.L.M. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82